# EUROPEAN PATENT APPLICATION

(11) **EP 2 253 861 A2**
(43) Date of publication of application: **24.11.2010**
(21) Application number: 10157486.1
(22) Date of filing: 24.03.2010
(51) Int. Cl.: F16D 48/06

(54) **Clutch-by-wire system**

(30) Priority: 20.05.2009 JP 2009121584
(71) Applicant: AISIN SEIKI KABUSHIKI KAISHA, Kariya-shi, Aichi 448-8650 (JP)
(72) Inventor: Oda, Naochika, Kariya-shi Aichi 448-8650 (JP); Taguchi, Yoshinori, Kariya-shi Aichi 448-8650 (JP); Shimizu, Masaru, Kariya-shi Aichi 448-8650 (JP)
(74) Representative: Kramer - Barske - Schmidtchen

(57) **Abstract**

A clutch-by-wire system includes: an automatic clutch (20) having a clutch (21) disposed on a power transmission system pathway, and a clutch actuator (23); a clutch pedal sensor (41); and an electronic control device (50) which automatically controls an operation of the clutch actuator in response to an operating state at the time of an automatic mode and controls an operation of the clutch actuator (23) on the basis of a signal from the clutch pedal sensor (41) at the time of a manual mode, wherein the electronic control device (50) compares a first control amount manually controlled in response to a signal from the clutch pedal sensor (41) with a second control amount automatically controlled in response to the operating state and controls the clutch actuator (23) in accordance with the control amount on a non-engagement side out of the first control amount and the second control amount.

## Description

### TECHNICAL FIELD

This disclosure relates to a clutch-by-wire system in which manual speed change and automatic speed change can be changed over.

### BACKGROUND DISCUSSION

There is a vehicle in which it is possible to switch to an automatic mode or a manual mode in response to a driver's demand in one vehicle. Such a vehicle has a clutch-by-wire system which has an automatic clutch disposed on a power transmission pathway between an engine and an automatic transmission and an electronic control device which controls the automatic clutch and the automatic transmission, wherein manual speed change and automatic speed change can be changed over by the electronic control device.

With regard to a conventional clutch-by-wire system, there is disclosed a control device of a power train for a vehicle, including: a speed change section which changes and transmits an output of an engine to a drive wheel side of a vehicle and can select a mode between an automatic mode and a manual mode, clutch-by-wire means which can electrically control the degree of fastening of a clutch provided on a power transmission pathway between the engine and the drive wheel on the basis of an operation of a clutch pedal by a driver, and clutch-by-wire control means which makes the control of the degree of fastening of the clutch be turned ON when a mode of the speed change section is the manual mode, and makes the control of the degree of fastening of the clutch be turned OFF when a mode of the speed change section is the automatic mode (refer to JP-A-2005-214370 (Patent Document 1)). In this way, for example, in a case where a husband wants a manual transmission car, whereas a wife wants an automatic transmission car, or a case where a manual transmission car is good during usual running, whereas an automatic transmission car is good at the time of traffic congestion, such a request can be met by one vehicle. Also, by using a feature of a clutch-by-wire, a relationship between a clutch pedal stroke and an engagement position of a clutch is devised such that optimum characteristics are obtained in accordance with a state of a vehicle.

However, as a problem of the control device described in Patent Document 1, the troublesomeness of a switch operation for switching between the automatic mode and the manual mode can be given. That is, in the control device described in Patent Document 1, since the switching between the automatic mode and the manual mode is performed by an operation of a M mode switch, it is necessary for a driver to separate and use the M mode switch in accordance with a case where the automatic mode is advantageous, such as a scene of traffic congestion in which start and stop are repeated, a case where a driver wants to perform inertia travel by making a clutch be in a non-engagement state, and a case where the manual mode is advantageous such as a scene in which a driver wants to perform acceleration by rapid engagement, so that it is troublesome.

A need thus exists for a clutch-by-wire system in which an automatic mode and a manual mode are switched without an operation of a switch.

### SUMMARY

According to an aspect of this disclosure, there is provided a clutch-by-wire system including: an automatic clutch having a clutch disposed on a power transmission system pathway between an internal combustion engine and a transmission, and a clutch actuator which operates engagement and non-engagement of the clutch; a clutch pedal sensor which detects the stepping-on amount of a clutch pedal; and an electronic control device which automatically controls an operation of the clutch actuator in response to an operating state at the time of an automatic mode and controls an operation of the clutch actuator on the basis of a signal from the clutch pedal sensor at the time of a manual mode, wherein the electronic control device compares a first control amount manually controlled in response to a signal from the clutch pedal sensor with a second control amount automatically controlled in response to the operating state and controls the clutch actuator in accordance with the control amount on a non-engagement side out of the first control amount and the second control amount.

In the clutch-by-wire system according to the aspect of this disclosure, it is preferable that the electronic control device includes a manual clutch stroke calculation section which collects information about a clutch pedal stroke from the clutch pedal sensor and calculates a manual clutch stroke as the first control amount in accordance with a predetermined program; an automatic clutch stroke calculation section which collects information about the operating state and calculates an automatic clutch stroke as the second control amount in accordance with the program; a clutch stroke comparison section which compares the automatic clutch stroke calculated at the automatic clutch stroke calculation section with the manual clutch stroke calculated at the manual clutch stroke calculation section and selects information about a clutch stroke on the smaller side; and a clutch actuator control section which controls an operation of the clutch actuator on the basis of information about the clutch stroke from the clutch stroke comparison section.

In the clutch-by-wire system according to the aspect of this disclosure, it is preferable that the electronic control device further includes a pedal stroke correction section which collects information about a clutch pedal stroke from the clutch pedal sensor, corrects the clutch pedal stroke in accordance with the program, and outputs information about the corrected clutch pedal stroke to the manual clutch stroke calculation section.

In the clutch-by-wire system according to the aspect this disclosure, it is preferable that the pedal stroke correction section decides whether or not the clutch pedal stroke from the clutch pedal sensor is equal to or more than an upper limit value calculated in accordance with the program, when stepping-on of the clutch pedal has moved to an engagement side, corrects the clutch pedal stroke to become the upper limit value, when the clutch pedal stroke is equal to or more than the upper limit value, and outputs the corrected clutch pedal stroke to the manual clutch stroke calculation section.

In the clutch-by-wire system according to the aspect this disclosure, it is preferable that the pedal stroke correction section change over the upper limit value in response to an engine rotation number or vehicle speed and an operation position of the clutch pedal.

In the clutch-by-wire system according to the aspect of this disclosure, it is preferable that the pedal stroke correction section change over the upper limit value so as to be increased in accordance with an increase in the engine rotation number or the vehicle speed.

In the clutch-by-wire system according to the aspect of this disclosure, it is preferable that the pedal stroke correction section change over the upper limit value such that when the engine rotation number or the vehicle speed is lower than a given engine rotation number or vehicle speed, the upper limit value becomes larger as a position of the clutch pedal comes close to an engagement side.

In the clutch-by-wire system according to the aspect of this disclosure, it is preferable that the pedal stroke correction section change over the upper limit value such that when the engine rotation number or the vehicle speed is higher than a given engine rotation number or vehicle speed, the upper limit value becomes smaller as a position of the clutch pedal comes close to an engagement side.

According to the aspect of this disclosure, with regard to the control of the automatic clutch, the automatic mode and the manual mode can be switched only by an operation of the clutch pedal, so that a troublesome switch operation is not needed. For example, if driving is performed without using the clutch pedal, (1) even if stopping is performed without stepping on the clutch pedal, engine stall does not occur and an operation of the clutch pedal for speed change is not needed (speed change can be performed only by an operation of a lever). On the other hand, if a driver steps on the clutch pedal, an equivalent operation to that of a manual transmission car becomes possible, so that (1) rapid acceleration from a state where the engine is blown up is possible which cannot be realized in an automatic transmission having a general torque converter, and (2) in a AMT (Automated Manual Transmission) in which a speed change operation of a manual transmission is automated, when an engine torque just before stop and a brake force are simultaneously applied, shock is generated, or abnormal noise or vibrations such as judder is generated. However, according to the aspect of this disclosure, if stop is performed with inertia travel by stepping on the clutch pedal, stopping with less shock becomes possible.

### BRIEF DESCRIPTION OF THE DRAWINGS

The foregoing and additional features and characteristics of this disclosure will become more apparent from the following detailed description with the reference to the accompanying drawings, wherein:

Fig. 1 is a schematic view showing the configuration of a clutch-by-wire system related to Example 1 disclosed here;

Fig. 2 is a block diagram schematically showing constituent sections related to clutch control in an electronic control device of the clutch-by-wire system related to Example 1 disclosed here;

Fig. 3 is a flow chart schematically showing a clutch stroke control operation in the electronic control device of the clutch-by-wire system related to Example 1 disclosed here;

Fig. 4 is a time chart schematically showing one example of the clutch stroke control operation in the electronic control device of the clutch-by-wire system related to Example 1 disclosed here;

Fig. 5 is a block diagram schematically showing constituent sections related to clutch control in an electronic control device of a clutch-by-wire system related to Example 2 disclosed here;

Fig. 6 is a schematic view for explaining an upper limit value of a pedal stroke correction section in the electronic control device of the clutch-by-wire system related to Example 2 disclosed here;

Fig. 7 is a flow chart schematically showing an operation of the pedal stroke correction section in the electronic control device of the clutch-by-wire system related to Example 2 disclosed here;

Fig. 8 is a block diagram schematically showing constituent sections related to clutch control in an electronic control device of a clutch-by-wire system related to Example 3 disclosed here;

Fig. 9 is a view for explaining the permissible amount of a pedal stroke correction section in the electronic control device of the clutch-by-wire system related to Example 3 disclosed here; and

Fig. 10 is a flow chart schematically showing an operation of the pedal stroke correction section in the electronic control device of the clutch-by-wire system related to Example 3 disclosed here.

### DETAILED DESCRIPTION

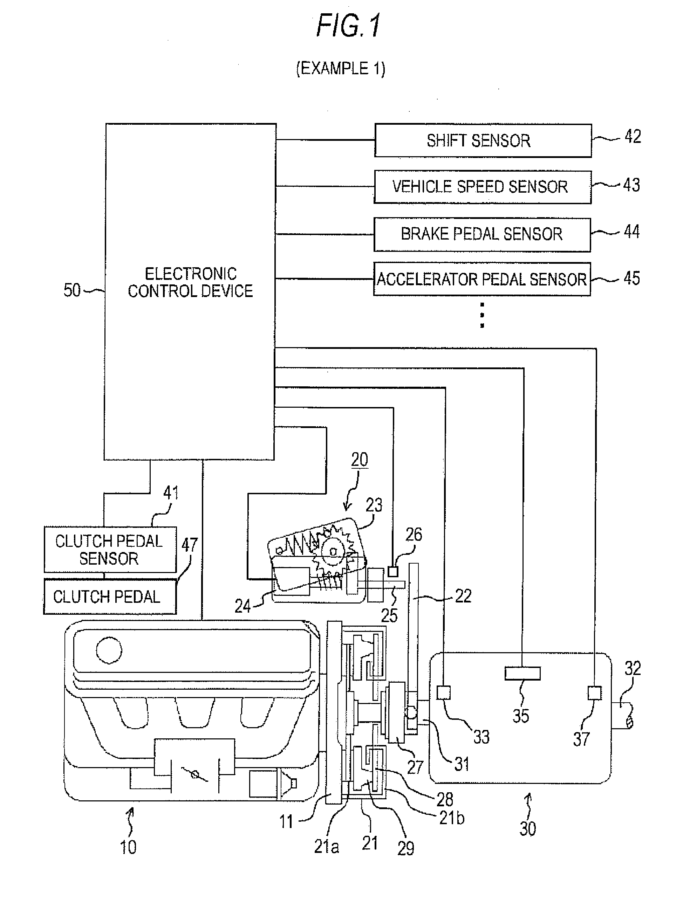

A clutch-by-wire system related to an embodiment disclosed here includes an automatic clutch (20 in Fig. 1) having a clutch (21 in Fig. 1) disposed on a power transmission system pathway between an internal combustion engine (10 in Fig. 1) and a transmission (30 in Fig. 1) and a clutch actuator (23 in Fig. 1) which operates engagement and non-engagement of the clutch; a clutch pedal sensor (41 in Fig. 1) which detects the stepping-on amount of a clutch pedal 47; and an electronic control device (50 in Fig. 1) which automatically controls an operation of the clutch actuator in response to an operating state (a given state except for a clutch pedal stroke from the clutch pedal sensor 41) at the time of an automatic mode and controls an operation of the clutch actuator on the basis of a signal from the clutch pedal sensor at the time of a manual mode, wherein the electronic control device compares a first control amount manually controlled in response to a signal from the clutch pedal sensor with a second control amount automatically controlled in response to the operating state and controls the clutch actuator in accordance with the control amount on a non-engagement side (smaller side) out of the first control amount and the second control amount.

### Example 1

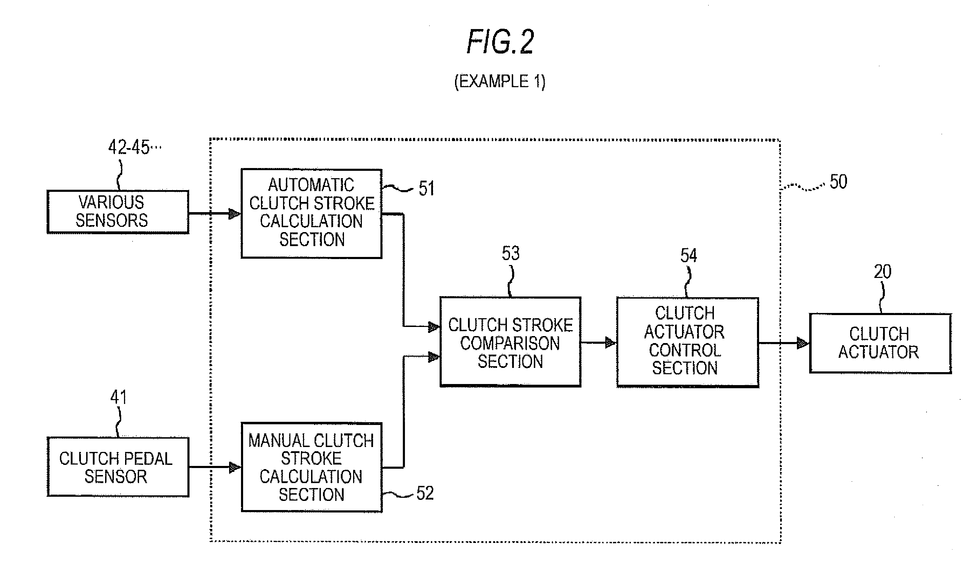

A clutch-by-wire system related to Example 1 disclosed here will be explained using the drawings. Fig. 1 is a schematic view showing the configuration of the clutch-by-wire system related to Example 1 disclosed here. Fig. 2 is a block diagram schematically showing constituent sections related to clutch control in an electronic control device of the clutch-by-wire system related to Example 1 disclosed here.

The clutch-by-wire system is a system in which an automatic clutch 20 is provided on a power transmission pathway between an engine 10 and an automatic transmission 30, the automatic clutch 20 and the automatic transmission 30 are controlled by an electronic control device 50, and switching between manual speed change and automatic speed change can be performed by the electronic control device 50. The clutch-by-wire system includes the engine 10, the automatic clutch 20, the automatic transmission 30, various sensors 41 to 45, and the electronic control device 50.

The engine 10 is, for example, an internal combustion engine which outputs rotational power by combustion of fuel (for example, hydrocarbon system fuel as gasoline or diesel oil). The rotational power of the engine 10 is transmitted to the automatic clutch 20 through a flywheel 11. The engine 10 has various sensors (an engine rotation sensor, etc.) and actuators (actuators which drive an injector and a throttle valve, etc.), is connected to the electronic control device 50 so as to be able to communicate, and controlled by the electronic control device 50.

The automatic clutch 20 is a device which is disposed on the power transmission pathway between the engine 10 and the automatic transmission 30 and can automatically connect or cut the rotational power from the engine 10 to the automatic transmission 30. As the automatic clutch 20, a dry type clutch, an electromagnetic clutch, wet type clutch, or the like can be used. The automatic clutch 20 includes a friction clutch 21 and a clutch actuator 23.

The friction clutch 21 is provided with a clutch disc 21a which is disposed facing the flywheel 11 and rotates integrally with an input shaft 31 of the automatic transmission 30. The friction clutch 21 changes rotation transmission, that is, clutch torque, between the flywheel 11 and the clutch disc 21a (between an output shaft of the engine 10 and the input shaft 31 of the automatic transmission 30) by a change in the pressing load of the clutch disc 21a against the flywheel 11.

The clutch actuator 23 is an actuator which operates rotation transmission by the friction clutch 21 through a clutch lever 22. The clutch actuator 23 is provided with an electric motor 24 as a driving source thereof, connected to the electronic control device 50 so as to be able to communicate, and controlled by the electronic control device 50. The clutch actuator 23 moves the clutch lever 22 by moving forward or backward (advancing or retreating) a rod 25 by the driving of the electric motor 24. In this way, a release bearing 27 is pushed through the clutch lever 22, and then a diaphragm spring 28 which comes into elastic contacts with the release bearing is deformed, so that pressing load is applied to a pressure plate 29. The pressure plate 29 is supported on a cover 21b of the friction clutch 21 which rotates integrally with the flywheel 11. The clutch actuator 23 operates the rotation transmission by the friction clutch 21 by changing the pressing load of the clutch disc 21a against the flywheel 11 through the pressure plate 29 by moving the clutch lever 22 through the rod 25.

Specifically, if the rod 25 moves forward (advances), so that the clutch lever 22 is pushed to the right side of Fig. 1 by the rod 25, the pressing load of the clutch disc 21a against the flywheel 11 is reduced. To the contrary, if the rod 25 moves backward (retreats), so that the clutch lever 22 is returned, the pressing load of the clutch disc 21a against the flywheel 11 is increased.

Here, a relationship between a movement position of the rod 25 and the rotation transmission by the friction clutch 21 is explained. If the rod 25 moves forward (advances), finally, the pressing load of the clutch disc 21a against the flywheel 11 almost disappears. At this time, the flywheel 11 and the clutch disc 21a are separated, so that the rotation transmission between the flywheel 11 and the clutch disc 21a does not occur. A state where the rotation transmission does not occur is called a non-engagement state (disconnection state) of the clutch. Also, the position of the rod 25 at this time is called a standby point. In addition, the amount of movement of the rod, which corresponds to the position of the rod 25, is called a clutch stroke (clutch actuator stroke) as a control amount.

If the rod 25 moves backward (retreats) from the standby point, the pressing load of the clutch disc 21a against the flywheel 11 increases in response to the amount of movement of the rod. At this time, a rotation number difference (slip amount) corresponding to the pressing load is provided, so that the rotation transmission between the flywheel 11 and the clutch disc 21a occurs. In particular, if a rotation number difference (slip amount) almost disappears due to increase in the pressing load by the movement (retreat) of the rod 25, the flywheel 11 and the clutch disc 21a rotate in synchronization with each other. The state of carrying out the synchronous rotation is called a complete engagement state of the clutch. Also, a position of the rod 25 at this time is called a complete engagement point. Therefore, the slip amount between the flywheel 11 and the clutch disc 21a is controlled by controlling the amount of movement (clutch stroke) of the rod 25 between the standby point and the movement position at the time of synchronization (the complete engagement point) by the clutch actuator 23. Hereafter, a state where the amount of movement (clutch stroke) of the rod 25 is in the range from the standby point to the complete engagement point and slip is permitted between the flywheel 11 and the clutch disc 21a is called a half clutch state. In addition, a half clutch state including a complete engagement state is particularly called an engagement state of the clutch.

The automatic clutch 20 is provided with a stroke sensor 26 which detects a clutch stroke which is the movement position of the rod 25 of the clutch actuator 23. The stroke sensor 26 is connected to the electronic control device 50 so as to be able to communicate. A signal related to the clutch stroke detected by the stroke sensor 26 is provided for a judgment of the rotation transmission state by the friction clutch 21 in the electronic control device 50, and so on.

The automatic transmission 30 is a transmission which has a gear mechanism which changes the rotational power from the engine 10 and outputs it to drive wheels (not shown), and can automatically switch a speed change step. As the automatic transmission 30, a transmission can be used which is a parallel shaft gear type transmission having, for example, a forward 5-step and a reverse 1-step and is provided with the input shaft 31, an output shaft 32, and a plurality of speed change gear trains. The input shaft 31 is connected to the clutch disc 21a of the friction clutch 21 so as to be able to transmit power. The output shaft 32 is connected to the drive wheels (not shown) so as to be able to transmit power. An input shaft rotation number sensor 33 which detects the rotation number of the input shaft 31 and an output shaft rotation number sensor 37 which detects the rotation number of the output shaft 32 (an output shaft rotation number) are built in the automatic transmission 30. Also, a speed change actuator 35 for operating the changing-over of the speed change gear trains (speed change steps) disposed on a power transmission pathway between the input shaft 31 and the output shaft 32 is built in the automatic transmission 30. The automatic transmission 30 is connected to the electronic control device 50 so as to be able to communicate, and controlled by the electronic control device 50. The automatic transmission 30 is switched to a required speed change step by the driving of the speed change actuator 35. In addition, the automatic transmission 30 is not limited to the parallel shaft gear type transmission, but may be a planetary gear type transmission which can perform speed change by oil pressure or the like by using a plurality of planetary gears, a brake, a clutch, and a solenoid valve, or a continuously variable transmission which can continuously change a change gear ratio in a step-less manner.

The clutch pedal sensor 41 is a sensor which detects a position (stroke) of the clutch pedal 47 (not shown) of a driver's seat, and is electrically connected to the electronic control device 50.

A shift sensor 42 is a sensor which detects an operation of a shift lever (not shown) of a driver's seat, and is electrically connected to the electronic control device 50.

A vehicle speed sensor 43 is a sensor which detects a speed of a vehicle, and is electrically connected to the electronic control device 50.

A brake pedal sensor 44 is a sensor which detects a position (stroke) of a brake pedal (not shown) of a driver's seat, and is electrically connected to the electronic control device 50.

An accelerator pedal sensor 45 is a sensor which detects the stepping-on amount (stroke) of an accelerator pedal (not shown) of a driver's seat, and is electrically connected to the electronic control device 50.

The electronic control device 50 is a computer which controls the engine 10, the automatic clutch 20, and the automatic transmission 30 on the basis of a program. Various sensors and switches, such as the stroke sensor 26, the input shaft rotation number sensor 33, the output shaft rotation number sensor 37, the clutch pedal sensor 41, and the shift sensor 42, the clutch actuator 23, and the speed change actuator 35 are electrically connected to the electronic control device 50. In addition, the electronic control device 50 may also be configured so as to be divided into an engine control device and a transmission control device.

With regard to the engine 10, the electronic control device 50 collects information about operating states (accelerator opening from the accelerator pedal sensor 45, an engine rotation number from an engine rotation number sensor (not shown), an ON/OFF state from an ignition switch (not shown), and so on) needed for control and performs calculation in accordance with a predetermined program, thereby controlling actuators (not shown) of an injector (not shown), an igniter (not shown), and so on, which are built in the engine 10.

With regard to the automatic clutch 20 and the automatic transmission 30, the electronic control device 50 collects information about operating states (a clutch actuator stroke from the stroke sensor 26, a clutch pedal stroke from the clutch pedal sensor 41, a shift position from the shift sensor 42, vehicle speed from the vehicle speed sensor 43, a brake pedal stroke from the brake pedal sensor 44, an input shaft rotation number from the input shaft rotation number sensor 33, an output shaft rotation number from the output shaft rotation number sensor 37, an engine rotation number, and so on) needed for control and performs calculation in accordance with a predetermined program, thereby controlling the clutch actuator 23 and the speed change actuator 35. The electronic control device 50 automatically controls operations of the clutch actuator 23 and the speed change actuator 35 at the time of an automatic speed change mode, and controls operations of the clutch actuator 23 and the speed change actuator 35 on the basis of signals at least from the clutch pedal sensor 41, the shift sensor 42, and so on at the time of a manual speed change mode.

The electronic control device 50 has an automatic clutch stroke calculation section 51, a manual clutch stroke calculation section 52, a clutch stroke comparison section 53, a clutch actuator control section 54, and a pedal stroke correction section 55 as constituent sections which are related to the control of the clutch actuator 23 and realized by the execution of a program (refer to Fig. 2). The automatic clutch stroke calculation section 51 is a section which collects information about an operating state (a given state except for the clutch pedal stroke from the clutch pedal sensor 41) and calculates an automatic clutch stroke (second control amount) in accordance with a predetermined program. The manual clutch stroke calculation section 52 is a section which collects information about the clutch pedal stroke from the clutch pedal sensor 41 and calculates a manual clutch stroke (first control amount) in accordance with a predetermined program. The clutch stroke comparison section 53 is a section which compares the automatic clutch stroke calculated at the automatic clutch stroke calculation section 51 with the manual clutch stroke calculated at the manual clutch stroke calculation section 52 and outputs information about the smaller side clutch stroke to the clutch actuator control section 54. The clutch actuator control section 54 is a section which controls an operation of the electric motor 24 of the clutch actuator 23 on the basis of information about the clutch stroke from the clutch stroke comparison section 53. Incidentally, the automatic clutch stroke is control information for automatically controlling the clutch actuator 23 at the electronic control device 50. In addition, the manual clutch stroke is control information for controlling the clutch actuator 23 on the basis of an operation of the clutch pedal 47.

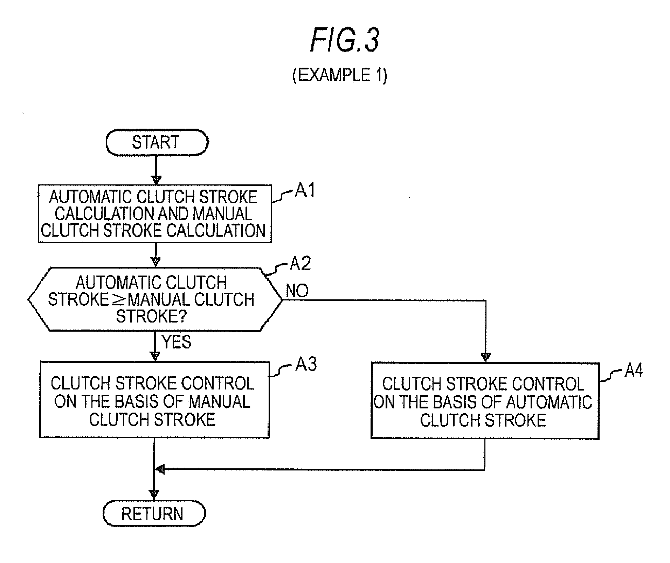

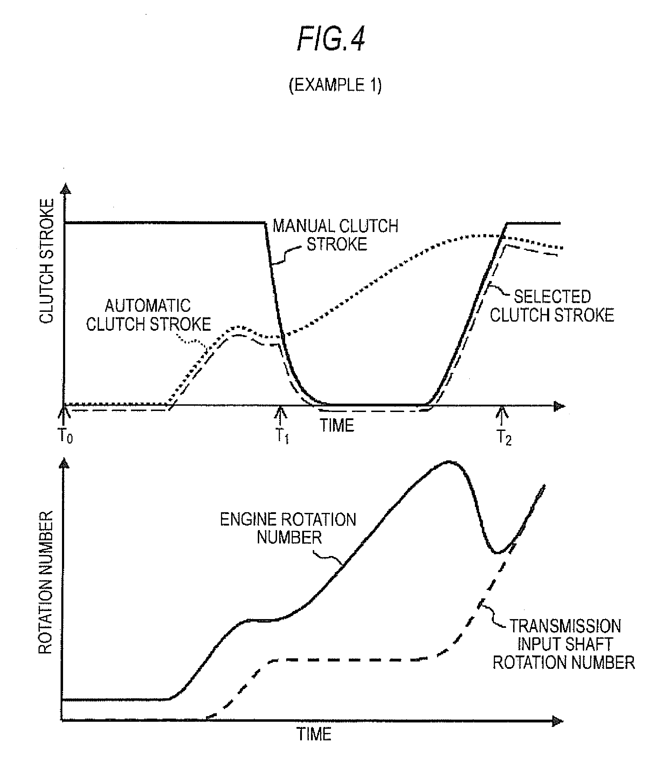

Next, a clutch stroke control operation in the electronic control device of the clutch-by-wire system related to Example 1 disclosed here will be explained using the drawings. Fig. 3 is a flow chart schematically showing the clutch stroke control operation in the electronic control device of the clutch-by-wire system related to Example 1 disclosed here. Fig. 4 is a time chart schematically showing one example of the clutch stroke control operation in the electronic control device of the clutch-by-wire system related to Example 1 disclosed here.

Referring to Fig. 3, first, the electronic control device 50 collects information about operating states from various sensors (except for the clutch pedal sensor 41), thereby calculating the automatic clutch stroke in accordance with a predetermined program at the automatic clutch stroke calculation section 51, and also collects information about a clutch pedal stroke (actual pedal stroke) from the clutch pedal sensor 41, thereby calculating the manual clutch stroke in accordance with a predetermined program at the manual clutch stroke calculation section 52 (Step A1).

After Step A1, the electronic control device 50 decides whether or not the automatic clutch stroke calculated at the automatic clutch stroke calculation section 51 is equal to or more than the manual clutch stroke calculated at the manual clutch stroke calculation section 52, at the clutch stroke comparison section 53 (Step A2). In a case where the automatic clutch stroke is not equal to or more than the manual clutch stroke (NO in Step A2), the process advances to Step A4.

In a case where the automatic clutch stroke is equal to or more than the manual clutch stroke (YES in Step A2), the electronic control device 50 outputs information about the manual clutch stroke from the clutch stroke comparison section 53 to the clutch actuator control section 54 and controls an operation of the electric motor 24 of the clutch actuator 23 on the basis of the information about the manual clutch stroke at the clutch actuator control section 54, thereby controlling the clutch stroke of the automatic clutch 20 (Step A3). Thereafter, the process returns to START. The clutch stroke control related to Step A3 corresponds to control between time T₁ and time T₂ in Fig. 4.

In a case where the automatic clutch stroke is not equal to or more than the manual clutch stroke (NO in Step A2), the electronic control device 50 outputs information about the automatic clutch stroke from the clutch stroke comparison section 53 to the clutch actuator control section 54 and controls an operation of the electric motor 24 of the clutch actuator 23 on the basis of the information about the automatic clutch stroke at the clutch actuator control section 54, thereby controlling the clutch stroke of the automatic clutch 20 (Step A4). Thereafter, the process returns to START. The clutch stroke control related to Step A4 corresponds to control between time T₀ and time T₁ and control after time T₂ in Fig. 4.

According to the clutch stroke control operation as described above, for example, during start by automatic control, when the engine rotation number is not increased further than expected and start accelerating ability is considered to not increase as expected, a start according to a driver's intention can be performed by stepping on the clutch pedal, thereby performing a start while maintaining the engine 10 at a necessary rotation number. The waveforms of the automatic clutch stroke, the manual clutch stroke, the engine rotation number, and the transmission input shaft rotation number at this time are as shown in Fig. 4. Further, if a driver does not step on the clutch pedal, there is no change in the automatically controlled state. Therefore, even if a driver forgets to step on the clutch at the time of a stop, engine stall does not occur, and at the time of traffic congestion or the like, it is possible to repeat stop and start only by the accelerator and the brake, so that troublesomeness is alleviated.

According to Example 1, with regard to the control of the automatic clutch 20, the automatic mode and the manual mode can be switched only by an operation of the clutch pedal, so that a troublesome switch operation is not needed. For example, if driving is performed without using the clutch pedal, (1) even if stop is performed without stepping on the clutch pedal, engine stall does not occur and an operation of the clutch pedal for speed change is not needed (speed change can be performed only by an operation of a lever). On the other hand, if a driver steps on the clutch pedal, an equivalent operation to that of a manual transmission car becomes possible, so that (1) rapid acceleration from a state where the engine 10 is blown up is possible which cannot be realized in an automatic transmission having a general torque converter, and (2) in a AMT (Automated Manual Transmission) in which a speed change operation of a manual transmission is automated, when an engine torque just before a stop and a brake force are simultaneously applied, shock is generated, or abnormal noise or vibrations such as judder is generated. However, according to Example 1, if a stop is performed with inertia travel by stepping on the clutch pedal, a stop with less shock becomes possible.

### Example 2

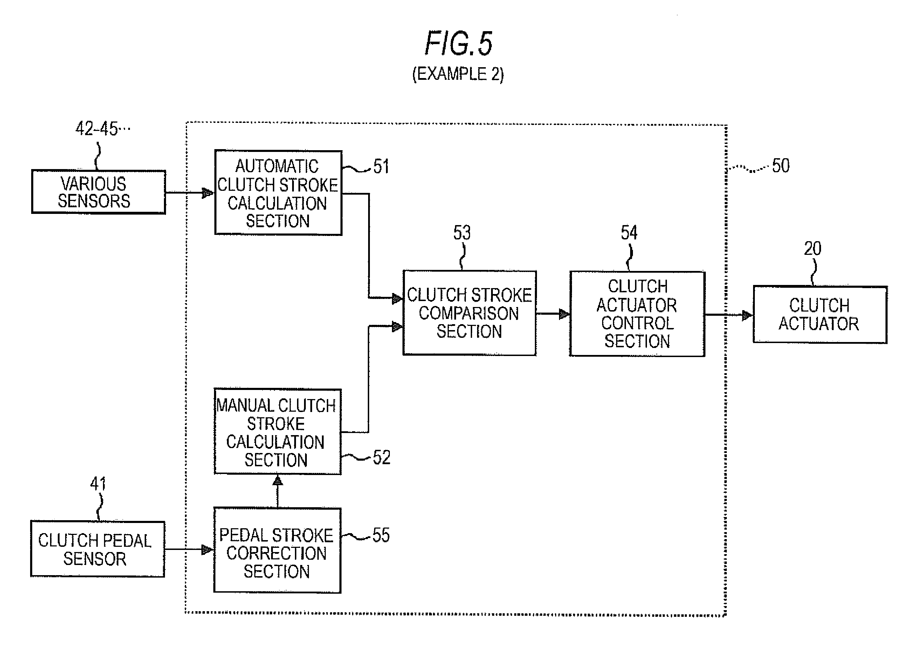

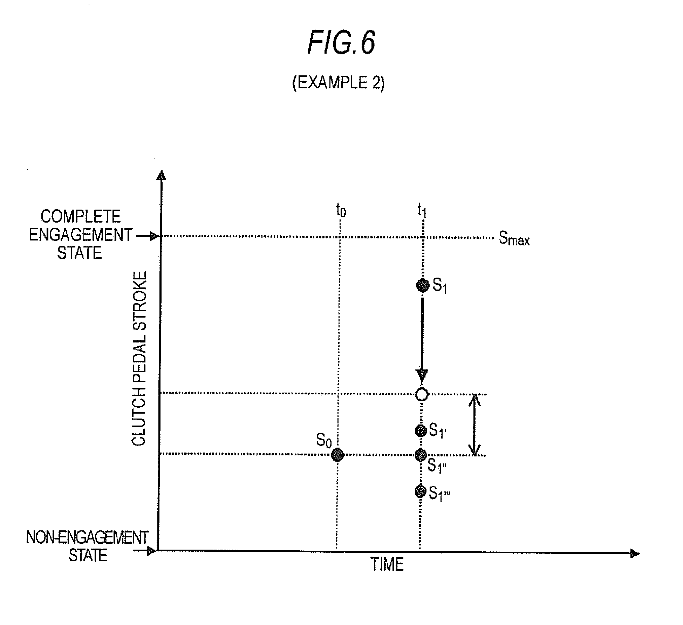

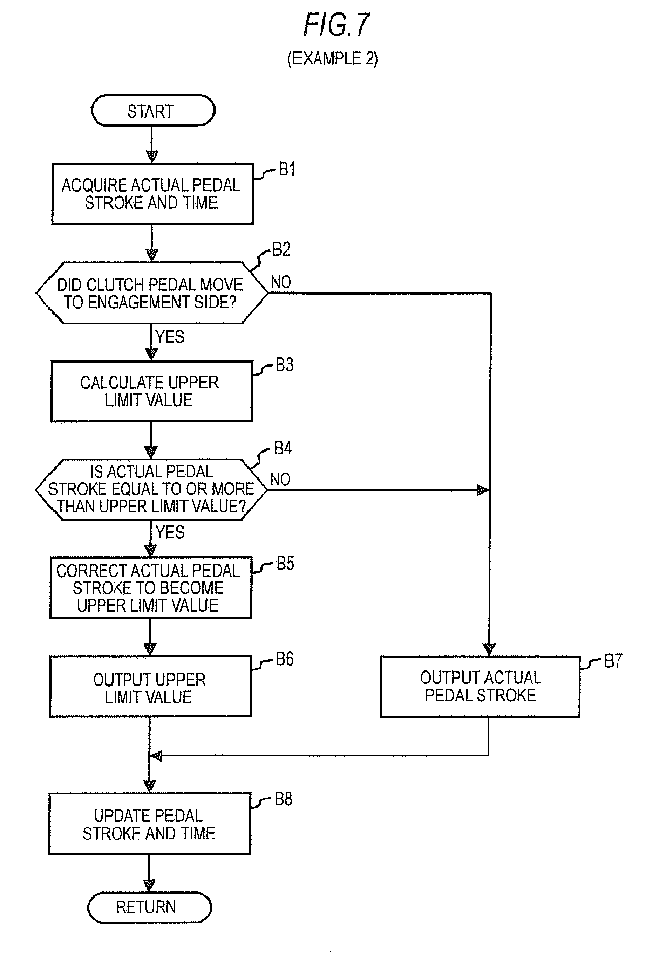

A clutch-by-wire system related to Example 2 disclosed here will be explained using the drawings. Fig. 5 is a block diagram schematically showing constituent sections related to clutch control in an electronic control device of the clutch-by-wire system related to Example 2 disclosed here. Fig. 6 is a schematic view for explaining an upper limit value of a pedal stroke correction section in the electronic control device of the clutch-by-wire system related to Example 2 disclosed here. Fig. 7 is a flow chart schematically showing an operation of the pedal stroke correction section in the electronic control device of the clutch-by-wire system related to Example 2 disclosed here.

The clutch-by-wire system related to Example 2 is the same in basic configuration as that of Example 1 (refer to Fig. 1) except that the pedal stroke correction section 55 is added to the constituent sections related to the clutch control in the electronic control device 50. In a case where an engine rotation number is increased by stepping on the clutch pedal 47, a case where an operation of the clutch pedal mistakenly strays away, or the like, start acceleration exceeding driver's intention occurs. However, the pedal stroke correction section 55 is added, so that such start acceleration can be prevented. The other configurations and control operations are the same as those in Example 1.

The pedal stroke correction section 55 is a section which collects information about a clutch pedal stroke from the clutch pedal sensor 41 and corrects the clutch pedal stroke in accordance with a predetermined program. The detailed operation of the pedal stroke correction section 55 is as follows.

First, the pedal stroke correction section 55 acquires a clutch pedal stroke (for example, an actual pedal stroke S₁, S₁', S₁", or S₁"' in Fig. 6) from the clutch pedal sensor 41, and also acquires time t₁ from a clock function section (not shown) in the electronic control device 50 (Step B1). Incidentally, the actual pedal stroke S₁ is acquired at time t₁ after the lapse of a certain period of time from time to (refer to Fig. 6).

After Step B1, the pedal stroke correction section 55 decides whether or not the clutch pedal has moved to an engagement side, by comparing the actual pedal stroke (for example, the actual pedal stroke S₁, S₁', S₁", or S₁"' in Fig. 6) acquired in Step B1 with a stored pedal stroke So (Step B2). For example, referring to Fig. 6, in a case where the actual pedal stroke is S₁ or S₁', since the actual pedal stroke is larger than So, it is decided that the clutch pedal has moved to the engagement side; in a case where the actual pedal stroke is S₁", since the actual pedal stroke is equal to So, it is decided that the clutch pedal has not moved to the engagement side; and in a case where the actual pedal stroke is S₁"', since the actual pedal stroke is smaller than So, it is decided that the clutch pedal has not moved to the engagement side. In a case where the clutch pedal has not moved to the engagement side (NO in Step B2), the process advances to Step B7. In addition, as the pedal stroke So, a pedal stroke at the time of an engine start is used only at the first time, and if the pedal stroke is updated at Step B8, the latest pedal stroke after the update is used.

In a case where the clutch pedal has moved to the engagement side (YES in Step B2), the pedal stroke correction section 55 calculates an upper limit value (Step B3). Here, as the upper limit value, in a case where a value in which a permissible amount L is added to the stored pedal stroke So does not reach a pedal stroke Sₘₐₓ of a complete engagement state, S₀+L is used, and in a case where a value in which the permissible amount L is added to the pedal stroke So is equal to or more than the pedal stroke Sₘₐₓ of the complete engagement state, Sₘₐₓ is used (refer to Fig. 6). In addition, the permissible amount L is the movement amount of the pedal stroke which is permitted to the engagement side between time to of the point of time when the pedal stroke So is acquired and time t₁, and is a constant amount in Example 2. Also, L/(t₁-t₀) corresponds to limit movement speed of the pedal stroke to the engagement side.

The pedal stroke correction section 55 decides whether or not the actual pedal stroke (for example, the actual pedal stroke S₁, S₁', S₁", or S₁"' in Fig. 6) acquired in Step B1 is equal to or more than the upper limit value calculated in Step B3 (Step B4). In a case where the actual pedal stroke is not equal to or more than the upper limit value (NO in Step B4), the process advances to Step B7.

After Step B4, in a case where the actual pedal stroke is equal to or more than the upper limit value (YES in Step B4), the pedal stroke correction section 55 corrects the actual pedal stroke to correspond to the upper limit value (Step B5). For example, in a case where the actual pedal stroke is S₁ in Fig. 6, since the actual pedal stroke is equal to or more than the upper limit value (S₀+L), the actual pedal stroke is corrected from S₁ to the upper limit value (S₀+L). In addition, in a case where the upper limit value is Sₘₐₓ, the actual pedal stroke is corrected to Sₘₐₓ.

After Step B5, the pedal stroke correction section 55 outputs the upper limit value after the correction to the manual clutch stroke calculation section 52 as a pedal stroke corresponding to time t₁ (Step B6). If the pedal stroke from the pedal stroke correction section 55 is input to the manual clutch stroke calculation section 52, a manual clutch stroke is calculated on the basis of the pedal stroke, and the same processes as those in Example 1 (refer to Fig. 3) are carried out.

In a case where the clutch pedal has not moved to the engagement side (NO in Step B2), or in a case where the actual pedal stroke is not equal to or more than the upper limit value (NO in Step B4), the pedal stroke correction section 55 outputs the non-corrected actual pedal stroke to the manual clutch stroke calculation section 52 as a pedal stroke (Step B7). For example, in a case where the actual pedal stroke is S₁', S₁", or S₁"' in Fig. 6, since the actual pedal stroke is smaller than the upper limit value (S₀+L), the actual pedal stroke of S₁', S₁", or S₁"' is output as it is. If the pedal stroke from the pedal stroke correction section 55 is input to the manual clutch stroke calculation section 52, a manual clutch stroke is calculated on the basis of the pedal stroke, and the same processes as those in Example 1 (refer to Fig. 3) are carried out.

After Step B6 or B7, the pedal stroke correction section 55 updates the stored pedal stroke So to the pedal stroke outputted in Step B6 or B7, and also updates the stored time to to time t₁ of the point of time when the actual pedal stroke S₁ was acquired in Step B1 (Step B8), and thereafter, the process returns to START.

According to Example 2, the same effects as those of Example 1 are achieved. Further, when the clutch pedal has been rapidly changed to the engagement side, the actual pedal stroke is corrected by the pedal stroke correction section 55. Therefore, in the automatic clutch, rapid engagement more than necessary is prevented, so that vehicle shock or driver's panic, which is caused by unintended rapid acceleration, can be prevented, and also in a case where the engine rotation number is low, engine stall due to rapid engagement can be prevented. That is, even if a clutch operation is incorrect, vehicle shock or engine stall does not occur. Further, a person unfamiliar with a manual operation or a driving beginner suddenly releases the clutch pedal, mistakenly steps on the pedal, or forgets to step on the pedal, so that engine stall or shock easily occurs. Therefore, the drive of a manual transmission vehicle tends to be considered difficult. However, according to Example 2, even if a driver mistakenly steps on the clutch pedal, the automatic clutch can be slowly engaged, so that the occurrence of engine stall is reduced and shock is alleviated. Therefore, even a beginner can drive a vehicle with an easy mind.

### Example 3

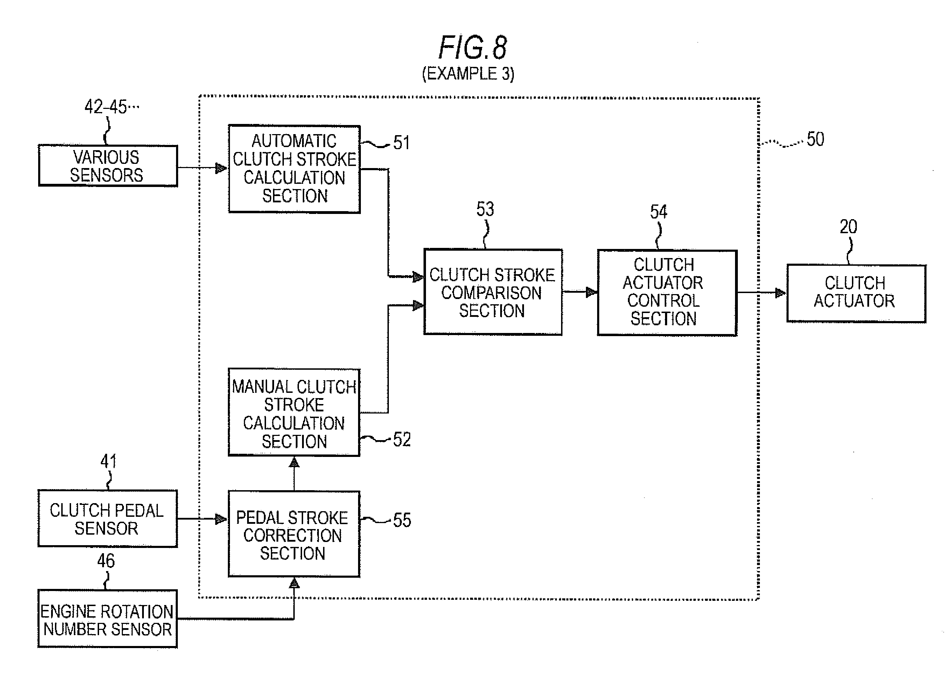

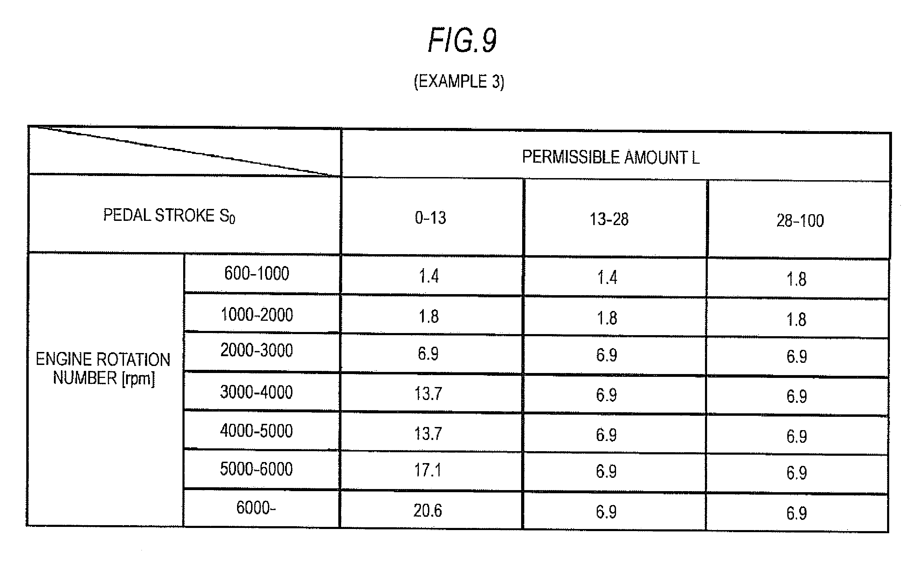

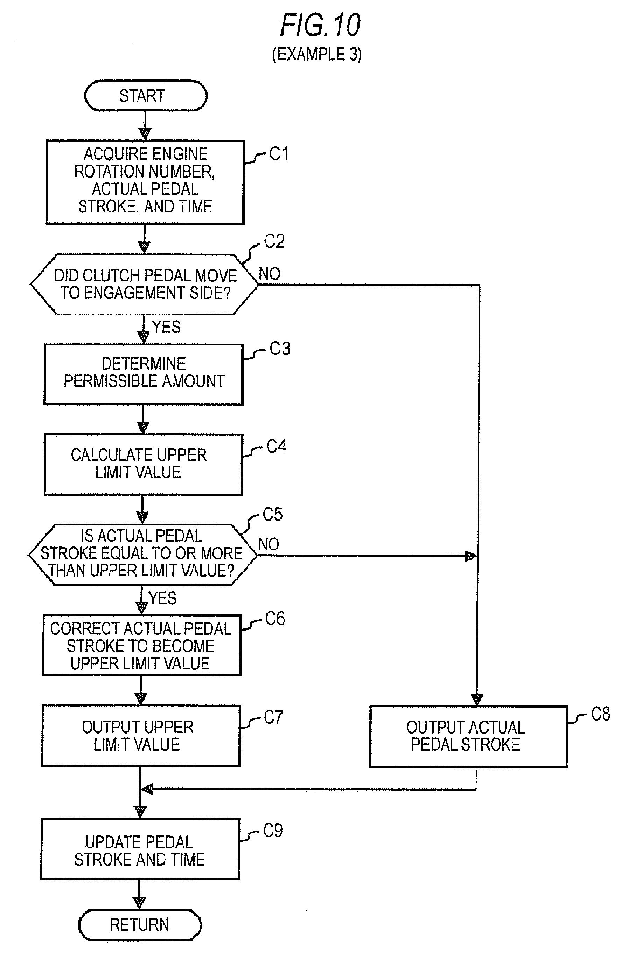

A clutch-by-wire system related to Example 3 disclosed here will be explained using the drawings. Fig. 8 is a block diagram schematically showing constituent sections related to clutch control in an electronic control device of the clutch-by-wire system related to Example 3 disclosed here. Fig. 9 is a view for explaining the permissible amount of the pedal stroke correction section in the electronic control device of the clutch-by-wire system related to Example 3 disclosed here. Fig. 10 is a flow chart schematically showing an operation of the pedal stroke correction section in the electronic control device of the clutch-by-wire system related to Example 3 disclosed here.

In Example 3, a configuration is made such that in the pedal stroke correction section 55 of the electronic control device 50, the permissible amount L (refer to Fig. 6) is not set to be a constant amount as in Example 2, but is changed in response to an engine rotation number (vehicle speed can also be adopted) or the pedal stroke So. For example, when an engine rotation number is small at the time of start, etc., a driver intends to slowly start. Thus, since a careful clutch pedal operation is necessary to be performed when the clutch starts to engage, the permissible amount L is set to be small so as to make the clutch slowly engage. Therefore, shock or engine stall due to a driver's error is prevented. Also, when an engine rotation number is large, a driver intends to rapidly start. Thus, the permissible amount L is set to be large so as to make the clutch engage at speed as in a pedal operation when the clutch starts to engage. Therefore, rapid start can be carried out.

The pedal stroke correction section 55 is a section which collects information about a clutch pedal stroke from the clutch pedal sensor 41 and information about an engine rotation number from the engine rotation number sensor 46 and corrects the clutch pedal stroke in accordance with a predetermined program. The detailed operation of the pedal stroke correction section 55 is as follows.

First, the pedal stroke correction section 55 acquires an engine rotation number from the engine rotation number sensor 46, a clutch pedal stroke from the clutch pedal sensor 41, and time t₁ from a clock function section (not shown) in the electronic control device 50 (Step C1). Incidentally, the actual pedal stroke S₁ is acquired at time t₁ after the lapse of a certain period of time from time to (refer to Fig. 6).

After Step C1, the pedal stroke correction section 55 decides whether or not the clutch pedal has moved to an engagement side, by comparing the actual pedal stroke acquired in Step C 1 with a stored pedal stroke So (Step C2). In a case where the clutch pedal has not moved to the engagement side (NO in Step C2), the process advances to Step C8. Incidentally, Step C2 is the same as Step B2 (refer to Fig. 7) of Example 2.

In a case where the clutch pedal has moved to the engagement side (YES in Step C2), the pedal stroke correction section 55 determines the permissible amount L in response to a predetermined table (for example, refer to Fig. 9) on the basis of the engine rotation number acquired in Step C1 and the stored pedal stroke So (Step C3). For example, in a case where the engine rotation number is 2500 rpm and the pedal stroke So is 10, the permissible amount L is determined to be 6.9 (refer to Fig. 9). In addition, the permissible amount L is the amount of change of the pedal stroke which is permitted between time to of the point of time when the pedal stroke So is acquired and time t₁. Also, L/(t₁-t₀) corresponds to limit movement speed of the pedal stroke to the engagement side.

Here, in the table (refer to Fig. 9) which is used in Step C3, in the pedal stroke So in the range of 0 to 13 which is in the vicinity of non-engagement, the permissible amount L is set to be larger in accordance with an increase in the engine rotation number. When the engine rotation number is low, if an engagement state of the clutch is low, there is a fear that engine stall will occur. However, when the engine rotation number is high, engagement of the clutch is quickly performed so as to respond to a driver's request for rapid acceleration. Also, in the low engine rotation number in the range of 600 to 1000 rpm, the permissible amount L is set to be larger in accordance with an increase in the pedal stroke So to an engagement side. This is because even if the engine rotation number is low, if an engagement state of the clutch is high, engine stall hardly occurs. Also, in the engine rotation number exceeding 3000 rpm, the permissible amount L is set to be smaller as the pedal stroke So comes close to an engagement side. This is because when the engine rotation number is high, if the clutch is in an engagement state, the vehicle is in an already rapidly accelerated state.

After Step C3, the pedal stroke correction section 55 calculates the upper limit value on the basis of the permissible amount L determined in Step C3 (Step C4). Here, as the upper limit value, in a case where a value in which the permissible amount L is added to the stored pedal stroke So does not reach the pedal stroke Sₘₐₓ of a complete engagement state, S₀+L is used, and in a case where a value in which the permissible amount L is added to the pedal stroke So is equal to or more than the pedal stroke Sₘₐₓ of the complete engagement state, Sₘₐₓ is used (refer to Fig. 6).

After Step C4, the pedal stroke correction section 55 decides whether or not the actual pedal stroke acquired in Step C1 is equal to or more than the upper limit value calculated in Step C4 (Step C5). In a case where the actual pedal stroke is not equal to or more than the upper limit value (NO in Step C5), the process advances to Step C8.

In a case where the actual pedal stroke is equal to or more than the upper limit value (YES in Step C5), the pedal stroke correction section 55 corrects the actual pedal stroke to correspond to the upper limit value (Step C6). Incidentally, Step C6 is the same as Step B5 (refer to Fig. 7) of Example 2.

After Step C6, the pedal stroke correction section 55 outputs the upper limit value after the correction to the manual clutch stroke calculation section 52 as a pedal stroke corresponding to time t₁ (Step C7). Incidentally, Step C7 is the same as Step B6 (refer to Fig. 7) of Example 2. If the pedal stroke from the pedal stroke correction section 55 is input to the manual clutch stroke calculation section 52, a manual clutch stroke is calculated on the basis of the pedal stroke, and the same processes as those in Example 1 (refer to Fig. 3) are carried out.

In a case where the clutch pedal has not moved to the engagement side (NO in Step C2), or in a case where the actual pedal stroke is not equal to or more than the upper limit value (NO in Step C5), the pedal stroke correction section 55 outputs the non-corrected actual pedal stroke to the manual clutch stroke calculation section 52 as a pedal stroke (Step C8). Incidentally, Step C8 is the same as Step B7 (refer to Fig. 7) of Example 2. If the pedal stroke from the pedal stroke correction section 55 is input to the manual clutch stroke calculation section 52, a manual clutch stroke is calculated on the basis of the pedal stroke, and the same processes as those in Example 1 (refer to Fig. 3) are carried out.

After Step C7 or C8, the pedal stroke correction section 55 updates the stored pedal stroke So to the pedal stroke outputted in Step C7 or C8, and also updates the stored time to to time t₁ of the point of time when the actual pedal stroke S₁ is acquired in Step C1 (Step C9), and thereafter, the process returns to START. Incidentally, Step C9 is the same as Step B8 (refer to Fig. 7) of Example 2.

According to Example 3, the same effects as those of Example 1 are achieved. Further, the upper limit value (permissible amount L) can be changed over in response to an engine rotation number, vehicle speed, or an operation position of the clutch pedal, so that clutch engagement according to a driver's intention can be performed. That is, when a clutch engagement state is low and the engine rotation number or the vehicle speed is low, the permissible amount L is set to be small. In this way, even if a pedal operation error such as mistakenly stepping-on of the clutch pedal occurs, since the clutch slowly engages, the occurrence of engine stall is reduced and vehicle shock is alleviated. Also, when a driver early releases the pedal on purpose in a state where the engine rotation number is high, since it is considered to intend to rapidly accelerate, the clutch engagement state is low, and when the engine rotation number or the vehicle speed is high, the permissible amount L is set to be large, so that the clutch can engage at speed as in a clutch pedal operation, whereby rapid start can be carried out.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch-by-wire system comprising:
an automatic clutch having a clutch (21) disposed on a power transmission system pathway between an internal combustion engine (10) and a transmission (30), and a clutch actuator which operates engagement and non-engagement of the clutch;
a clutch pedal sensor (41) which detects the stepping-on amount of a clutch pedal; and
an electronic control device (50) which automatically controls an operation of the clutch actuator in response to an operating state at the time of an automatic mode and controls an operation of the clutch actuator on the basis of a signal from the clutch pedal sensor at the time of a manual mode,
wherein the electronic control device compares a first control amount manually controlled in response to a signal from the clutch pedal sensor with a second control amount automatically controlled in response to the operating state and controls the clutch actuator in accordance with the control amount on a non-engagement side out of the first control amount and the second control amount.

2. The clutch-by-wire system according to Claim 1, wherein the electronic control device (50) includes:
a manual clutch stroke calculation section (52) which collects information about a clutch pedal stroke from the clutch pedal sensor (41) and calculates a manual clutch stroke as the first control amount in accordance with a predetermined program;
an automatic clutch stroke calculation section (51) which collects information about the operating state and calculates an automatic clutch stroke as the second control amount in accordance with the program;
a clutch stroke comparison section (53) which compares the automatic clutch stroke calculated at the automatic clutch stroke calculation section with the manual clutch stroke calculated at the manual clutch stroke calculation section and selects information about a clutch stroke on the smaller side; and
a clutch actuator control section (54) which controls an operation of the clutch actuator (23) on the basis of information about the clutch stroke from the clutch stroke comparison section.

3. The clutch-by-wire system according to Claim 2, wherein the electronic control device (50) further includes a pedal stroke correction section (55) which collects information about a clutch pedal stroke from the clutch pedal sensor (41), corrects the clutch pedal stroke in accordance with the program, and outputs information about the corrected clutch pedal stroke to the manual clutch stroke calculation section.

4. The clutch-by-wire system according to Claim 3, wherein the pedal stroke correction section (55) decides whether or not the clutch pedal stroke from the clutch pedal sensor (41) is equal to or more than an upper limit value calculated in accordance with the program, when stepping-on of the clutch pedal (47) has moved to an engagement side, corrects the clutch pedal stroke to correspond to the upper limit value, when the clutch pedal stroke is equal to or more than the upper limit value, and outputs the corrected clutch pedal stroke to the manual clutch stroke calculation section.

5. The clutch-by-wire system according to Claim 4, wherein the pedal stroke correction section (55) changes over the upper limit value in response to an engine rotation number or vehicle speed and an operation position of the clutch pedal.

6. The clutch-by-wire system according to Claim 5, wherein the pedal stroke correction section (55) changes over the upper limit value so as to be increased in accordance with an increase in the engine rotation number or the vehicle speed.

7. The clutch-by-wire system according to Claim 5 or 6, wherein the pedal stroke correction section (55) changes over the upper limit value such that when the engine rotation number or the vehicle speed is lower than a given engine rotation number or vehicle speed, the upper limit value becomes larger as a position of the clutch pedal (47) comes close to an engagement side.

8. The clutch-by-wire system according to any one of Claims 5 to 7, wherein the pedal stroke correction section (55) changes over the upper limit value such that when the engine rotation number or the vehicle speed is higher than a given engine rotation number or vehicle speed, the upper limit value becomes smaller as a position of the clutch pedal (47) comes close to an engagement side.
